# FASCICULE DE BREVET EUROPEEN

(11) **EP 0 855 575 B1**
(45) Date de publication et mention de la délivrance du brevet: **05.06.2002**
(21) Numéro de dépôt: 98400148.7
(22) Date de dépôt: 23.01.1998
(51) Int. Cl.: G01B 5/00, B25J 9/16, B60J 1/00, G01B 5/004

(54) **Dispositif formant capteur destiné en particulier à déterminer la position relative d'un objet dans l'espace, telle que par exemple la position d'un pare-brise de véhicule par rapport à ce véhicule**
Messwertgebervorrichtung, insbesondere zum Ermitteln der räumlichen Lage eines Objekts, wie z.B. der Lage einer Fahrzeugwindschutzscheibe relativ zum Fahrzeug
Sensing device in particular for determining the relative position of an object in space, such as the position of a windshield of a vehicle with respect to this vehicle

(30) Priorité: 27.01.1997 FR 9700845
(43) Date de publication de la demande: 29.07.1998
(73) Titulaire: AUTOMOBILES PEUGEOT, 75116 Paris (FR); AUTOMOBILES CITROEN, 92200 Neuilly-sur-Seine (FR)
(72) Inventeur: Blanc, Christophe, 75015 Paris (FR); Humbert, Bruno, 92260 Fontenay aux Roses (FR)
(74) Mandataire: Thinat, Michel

(56) Documents cités:
- DE-A- 3 119 566
- DE-U- 9 402 550
- JP-A- 8 090 470
- US-A- 5 318 496
- DUELEN G ET AL: "INTEGRIERTES PLANUNGS- UND OFF-LINE-PROGRAMMIERSYSTEM" ZWF ZEITSCHRIFT FUR WIRTSCHAFTLICHE FERTIGUNG UND AUTOMATISIERUNG, vol. 86, no. 8, pages 376-380, XP000225898
- MUENCH H ET AL: "SENSORGESTUETZE, LAGE- UND KRAFTGEREGELTE AUTOMATISIERUNG VON MONTAGEAUFGABEN" ZWF ZEITSCHRIFT FUR WIRTSCHAFTLICHE FERTIGUNG UND AUTOMATISIERUNG, vol. 89, no. 9, pages 430-432, XP000463508
- LUETH T C ET AL: "RELIABILITY AND INTEGRATED CAPABILITIES OF LOCOMOTION AND MANIPULATION FOR AUTONOMOUS ROBOT ASSEMBLY" ROBOTICS AND AUTONOMOUS SYSTEMS, vol. 14, no. 2/03, pages 185-198, XP000504119

## Description

La présente invention concerne d'une manière générale l'assemblage en automatique de deux objets, tels que par exemple un pare-brise à fixer à l'ouverture de baie correspondante d'un véhicule automobile.

L'assemblage d'objets en automatique présente des problèmes liés au procédé global de fabrication des différents objets. En particulier, les tolérances de fabrication des objets à assembler sont généralement incompatibles avec un système automatique d'assemblage dépourvu de moyens de recherche. De même, les tolérances de positionnement des objets dans l'espace, du fait des moyens de manutention utilisés, sont généralement trop importantes pour un montage en automatique.

Pour résoudre ces problèmes de positionnement, différents systèmes ont été développés jusqu'à maintenant.

Généralement, ces systèmes utilisent un moyen, tel qu'un robot ou un manipulateur, pour saisir l'un des objets, tels que par exemple un pare-brise, et le déplacer dans l'espace suivant des trajectoires connues et figées pour l'amener en position relative d'assemblage avec l'autre objet, tel que l'ouverture de baie de pare-brise d'un véhicule automobile.

Des capteurs sont également utilisés pour mesurer la position relative des différents objets et sont reliés à un calculateur qui détermine des positions à atteindre par rapport aux positions figées de référence pour réaliser un assemblage correct.

Cependant, ces systèmes connus sont généralement limités dans leurs performances, en particulier au niveau des capteurs utilisés pour permettre l'assemblage de ces objets et qui sont habituellement constitués par des capteurs de déplacement du type potentiométrique, des capteurs de déplacement à transformateur différentiel (LVDT) analogique, des capteurs à ultra-sons ou une caméra.

Chacun de ces types de capteur utilisés possède des inconvénients qui peuvent être résumés comme suit :
- précision de mesure moyenne ;
- fiabilité médiocre due à l'usure des parties mobiles ;
- sensibilité à l'environnement telles que perturbations électromagnétiques, températures, courants d'air, vibrations ; et
- sensibilité à la couleur du véhicule.

DE-A-31 19 566 décrit un dispositif formant capteur comprenant les caractéristiques énoncées dans. le préambule de la revendication 1.

Cependant, ce dispositif connu est d'une construction mécanique telle que la mesure de position relative de l'objet est non linéaire, notamment en ce qui concerne la seconde touche de contact, de sorte qu'il y a perte de précision sur la mesure ainsi que sur la détermination de la position de l'objet mesuré.

La présente invention a pour but d'éliminer les inconvénients ci-dessus des systèmes connus de manière à améliorer la qualité d'assemblage d'objets ainsi que la fiabilité du procédé d'assemblage automatique de ces objets.

A cet effet, l'invention propose un dispositif formant capteur comprenant les caractéristiques faisant l'objet de la partie caractérisante de la revendication 1.

De préférence, le dispositif comprend un premier élément formant came de renvoi logé dans le corps principal et pouvant se déplacer en translation simultanément avec la première touche de contact de manière à déplacer une tige rigide logée dans le corps principal suivant une direction perpendiculaire à la direction de déplacement de la première touche de contact et le premier capteur permet de mesurer les valeurs de déplacement de la tige rigide.

La partie précitée solidaire du corps principal est un second élément formant came de renvoi agencé de façon à transformer une rotation du corps principal en une translation de la seconde touche de contact.

Le premier élément formant came de renvoi est solidaire de l'extrémité de la première touche de contact opposée à son extrémité libre devant contacter l'objet et la première touche de contact est maintenue à une position de repos par des moyens élastiques de rappel logés dans le corps principal.

Avantageusement, les moyens élastiques de rappel comprennent un premier ressort de rappel monté coaxialement sur une partie interne au corps principal de la première touche de contact en étant en appui entre une partie solidaire du corps principal et une plaque solidaire de la partie interne de la tige perpendiculairement à celle-ci et un second ressort de rappel opposé co-axialement au premier ressort de rappel et exerçant sur le premier élément formant came une force de rappel opposé à celle exerçée sur celui-ci par le premier ressort de rappel pour maintenir la première touche de contact à sa position de repos.

Le second ressort de rappel est monté co-axialement sur une tige interne au corps principal en étant en appui entre une partie fixe de ce corps et une plaque d'extrémité de la tige interne perpendiculaire à celle-ci, laquelle plaque est en appui sur le premier élément formant came.

La tige rigide déplaçable par le premier élément formant came de renvoi est en contact sur la surface de came de celui-ci par l'intermédiaire d'un galet monté à rotation à l'extrémité de cette tige et la seconde touche de contact est en appui sur la surface de came du second élément formant came par l'intermédiaire d'un galet monté à rotation à l'extrémité libre de la seconde touche de contact.

La seconde touche de contact est maintenue en appui sur la came, par exemple médiane, par un ressort monté dans la pièce de support coaxialement sur une partie interne de la tige de la seconde touche de contact et en appuyant entre une partie solidaire de la pièce de support et une plaque solidaire de la partie de tige perpendiculairement à celle-ci.

Les première et seconde touches de contact sont montées coulissantes respectivement dans des moyens de guidage à billes.

De préférence, les moyens de limitation de la rotation du corps principal relativement à la pièce de support comprennent une partie solidaire du corps principal faisant saillie de celui-ci et disposée entre deux butées espacées solidaires de la pièce de support et deux ressorts sont prévus de part et d'autre de la partie en saillie pour rappeler le corps principal à une position médiane de repos entre les deux butées de limitation.

Le corps principal est de forme générale cylindrique et peut tourner relativement à la pièce du support autour de son axe longitudinal et la première touche de contact comporte une pointe de touche rapportée, par exemple par vissage, à sa tige.

La pièce de support est fixée à un bras d'un robot utilisé pour assembler deux objets, tels que par exemple un pare-brise dans l'ouverture de baie de pare-brise correspondante d'un véhicule automobile constituant l'autre objet.

Avantageusement, les deux capteurs sont du type numérique.

L'invention propose également un procédé d'assemblage automatique de deux objets par un robot muni d'un outil de préhension d'un objet pour l'assembler et le fixer à un autre objet situé à un poste d'assemblage, consistant à saisir par l'outil de préhension l'objet centré en un point fixe sur un dispositif de recentrage ; piloter le robot suivant une trajectoire figée préalablement définie, caractérisé en ce que l'outil de préhension porte au moins deux dispositifs formant capteurs tels que définis précédemment, de manière qu'en pilotant le robot suivant la trajectoire figée, on amène les touches de contact des deux dispositifs formant capteurs en contact respectivement à deux emplacements différents déterminés de l'autre objet pour fournir des signaux de mesure de position de l'outil de préhension du robot relativement à l'autre objet dans les directions orthogonales de l'espace ; et en ce qu'il consiste également à acquérir les signaux de mesure par un calculateur apte à calculer à partir de ceux-ci des valeurs de décalage de position de l'outil de préhension du robot par rapport à des valeurs de référence ; transmettre ces valeurs de décalage au robot pour repositionner celui-ci relativement à l'autre objet; et commander le robot pour que son outil de préhension assemble et fixe précisément l'objet à l'autre objet.

Avantageusement, le procédé utilise quatre dispositifs formant capteurs identiques portés par l'outil de préhension pour fournir huit signaux de mesure de position de l'outil de préhension permettant de corriger les six degrés de liberté de l'objet dans l'espace par rapport à l'autre objet.

Lorsque l'objet précité est un pare-brise et l'autre objet est un véhicule automobile, l'étape précitée de positionnement relatif de l'outil de préhension du robot consiste tout d'abord à prépositionner l'outil de préhension, lorsque la tolérance de positionnement du véhicule est large, par exemple supérieure à 15 mm, en amenant les touches de contact des dispositifs formant capteurs à contacter le bord de l'ouverture de la baie de pare-brise du véhicule pour fournir des signaux de mesure de position de l'outil de préhension relativement à cette ouverture dans les directions X, Y et Z ; à repositionner l'outil de préhension du robot en lui transmettant les valeurs de décalage de position de cet outil calculées par le calculateur précité ; et à ensuite positionner précisément l'outil de préhension relativement à l'ouverture de la baie de pare-brise en amenant les touches de contact des dispositifs formant capteurs en contact au fond de la feuillure de ladite ouverture pour repositionner à nouveau l'outil de préhension à partir des valeurs de décalage de position de celui-ci calculées par le calculateur à partir des valeurs des signaux de mesure fournis par les dispositifs formant capteurs.

De préférence, deux des dispositifs formant capteurs sont destinés à effectuer une mesure sur le bord supérieur ou inférieur de l'ouverture de la baie de pare-brise tandis que les deux autres dispositifs formant capteurs sont destinés à effectuer une mesure respectivement sur les deux montants droit et gauche de cette ouverture.

Les dispositifs formant capteurs sont montés sur l'outil de préhension symétriquement à l'axe du pare-brise et sont du type numérique en étant reliés électriquement entre eux et au calculateur par un réseau de préférence sous forme d'une liaison série du type RS 485.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
La figure 1 est une vue latérale schématique du dispositif formant capteur tactile conformé à l'invention et montrant l'une des touches de contact de celui-ci en position extrême basse.
La figure 2 est une vue latérale semblable à celle de la figure 1 et montrant la touche de contact du dispositif formant capteur en position extrême haute.
La figure 3 est une vue schématique de face du dispositif formant capteur de l'invention.
La figure 4 est une vue schématique latérale extérieure du dispositif formant capteur de l'invention.
La figure 5 est une vue schématique de dessus du dispositif formant capteur suivant la flèche V de la figure 4.
La figure 6 est une vue en perspective du dispositif formant capteur de l'invention.
La figure 7 est une vue suivant la flèche VII de la figure 6.
La figure 8 est une vue en perspective agrandie d'une partie du dispositif formant capteur de l'invention et montrant une autre touche de contact de celui-ci en position sortie.
La figure 9 est une vue en perspective semblable à celle de la figure 8 et montrant la touche de contact en position rétractée.
La figure 10 est une vue schématique latérale d'une partie d'un véhicule automobile auquel doit être automatiquement assemblé un pare-brise par un robot à outil de préhension muni de quatre dispositifs formant capteurs, chacun identique à celui décrit en référence aux figures précédentes.
La figure 11 est une vue de face suivant la flèche XI de la figure 10.
Les figures 12-A à 12-D représentent un cycle de mesure par l'un des dispositifs formant capteurs de l'invention lorsque le robot réalise un prépositionnement d'un pare-brise relativement à un véhicule.
Les figures 13A à 13C représentent un cycle de mesure par l'un des dispositifs formant capteurs de l'invention lorsque le robot réalise un positionnement précis du pare-brise relativement au véhicule.
La figure 14 est un schéma synoptique de la mesure lors du prépositionnement représenté aux figures 12A à 12D ; et
La figure 15 est un schéma synoptique de la mesure lors du positionnement précis des figures 13A à 13C.

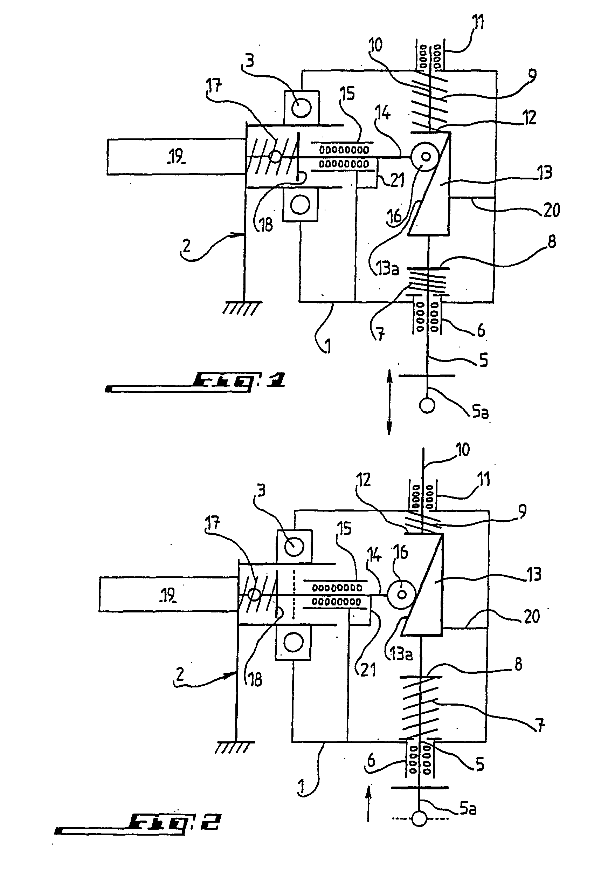

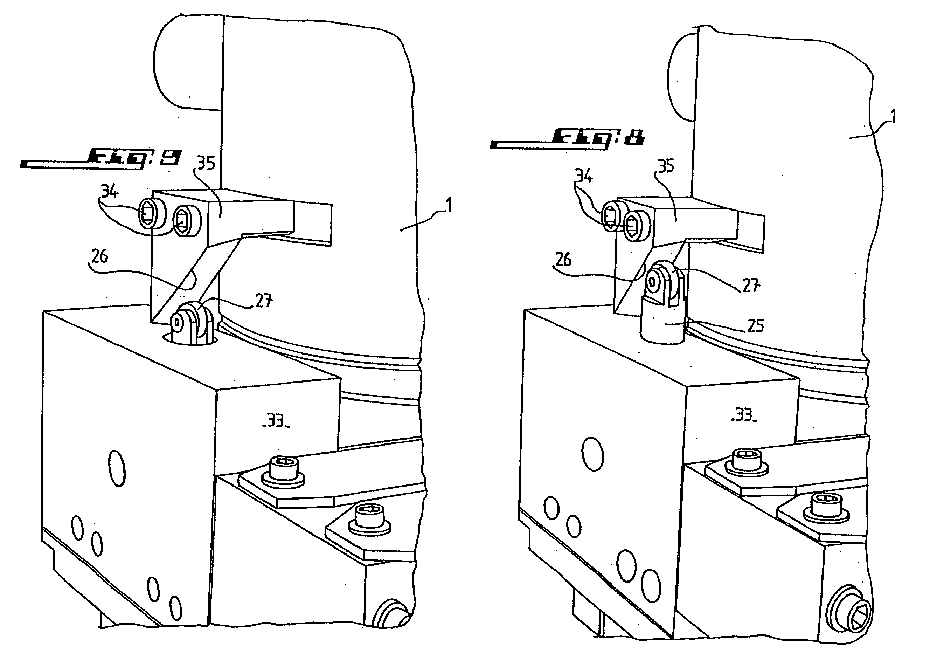

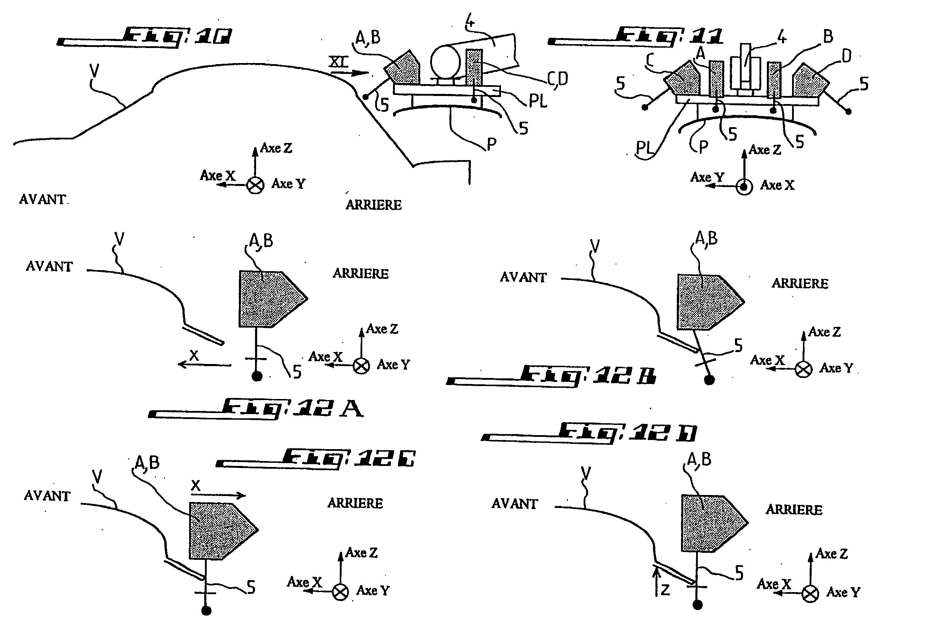

Le dispositif formant capteur de l'invention tel qu'il va être décrit aux figures 1 à 9 est destiné à être monté sur un outil de préhension d'un bras d'un robot utilisé pour la pose de pare-brises sur des véhicules automobiles, mais un tel dispositif peut également être utilisé dans d'autres applications, telles que par exemple l'assemblage automatique d'un tableau de bord d'un véhicule automobile, de portes à un véhicule automobile, etc.

Le dispositif formant capteur de l'invention va être décrit tout d'abord schématiquement en référence aux figures 1 à 5.

Ce dispositif comprend un corps principal 1 de forme générale cylindrique monté à rotation sur une pièce de support symbolisée par la référence 2 suivant une amplitude limitée autour de l'axe longitudinal de révolution du corps principal 1 par l'intermédiaire d'un roulement à billes 3.

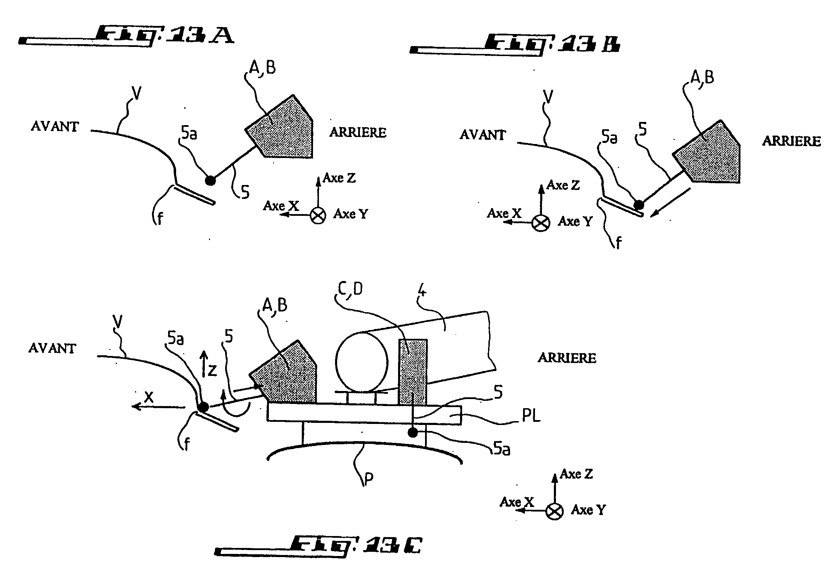

La pièce de support 2 peut être constituée par une plaque de support PL formant outil de préhension fixée à l'extrémité d'un bras de robot 4 comme représenté aux figures 7, 10, 11, et 13C.

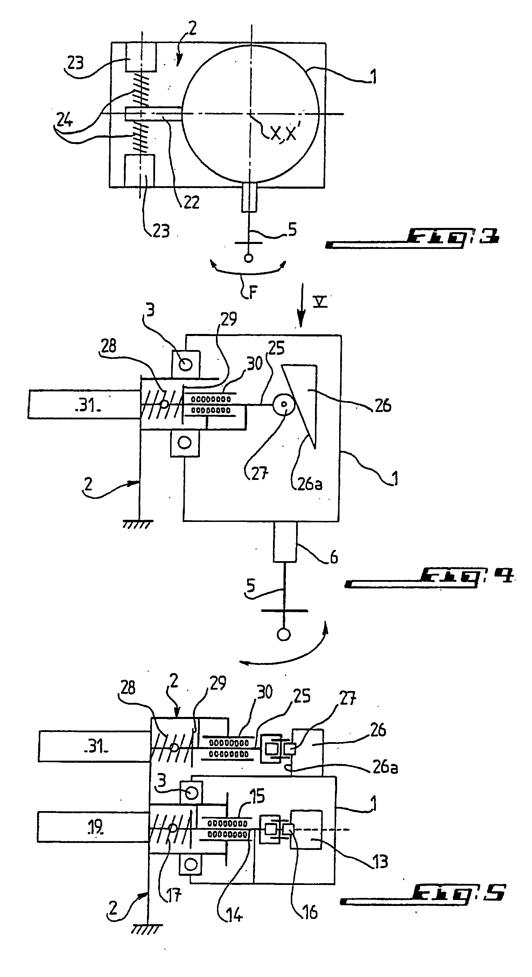

Le dispositif formant capteur comprend également une touche en forme de tige 5 destinée à contacter, lors des mouvements du bras de robot 4, une partie de bord de tôle de l'ouverture de la baie de pare-brise d'un véhicule automobile destinée à recevoir un pare-brise comme on le verra ultérieurement. En contactant cette partie de bord d'ouverture, la touche 5 peut se déplacer en translation de façon guidée dans le corps principal 1 par l'intermédiaire d'un moyen de guidage à billes 6 solidaire du corps 1. Les figures 1 et 2 représentent respectivement deux positions extrêmes basse et haute de la touche de contact 5 à partir d'une position moyenne ou médiane de repos de cette touche.

La touche de contact 5 peut être maintenue à la position médiane de repos par des moyens de rappel élastiques constitués par un ressort de rappel 7 monté coaxialement sur la partie de tige de la touche 5 interne au corps 1 et interposé entre le moyen de guidage à billes 6 solidaire du corps 1 et une plaque 8 solidaire de la partie interne de tige de la touche 5 perpendiculairement à celle-ci. Ces moyens de rappel comprennent également un autre ressort de rappel 9 monté coaxialement sur une tige 10 montée coulissante suivant son axe dans le corps 1 par l'intermédiaire d'un moyen de guidage à billes 11 solidaire de ce corps. Le ressort de rappel 9 prend appui entre le moyen de guidage à billes 11 et une plaque 12 solidaire de l'extrémité de la tige 10 perpendiculairement à celle-ci et est coaxial au ressort 7. La plaque 12 prend appui sur une extrémité d'un élément formant came de renvoi 13 solidaire, à son extrémité opposée, de l'extrémité interne au corps 1 de la touche de contact 5. Les ressorts de rappel 7 et 9 peuvent être tarés de manière à maintenir l'élément formant came de renvoi 13 en position médiane d'équilibre. Cependant, la position d'équilibre de repos peut être également celle représentée en figure 1 si l'on souhaite bénéficier d'un mouvement d'amplitude maximum de la touche de contact 5 lors des mesures à effectuer, on peut notamment supprimer le ressort 7.

L'élément formant came de renvoi 13 peut se déplacer en translation dans le corps 1 simultanément avec la touche de contact 5 de manière à provoquer le déplacement d'une tige rigide 14 logée dans le corps 1 suivant une direction perpendiculaire à la direction de déplacement de la touche de contact 5. La tige 14 peut coulisser de façon guidée dans le corps 1 par l'intermédiaire d'un moyen de guidage à billes 15 solidaire de ce corps et porte à son extrémité libre un galet 16 maintenu constamment en appui sur la surface de came 13a de l'élément 13 par l'intermédiaire d'un ressort de rappel 17 interposé entre le corps 1 et une plaque 18 solidaire de la tige 14 transversalement à celle-ci. Les valeurs de déplacement en translation de la tige 14 sont mesurées par un capteur 19, de préférence du type numérique, fixé à une partie de la pièce de support 2. Ainsi, la mesure de la position en translation de la touche de contact 5 est réalisée en transformant le mouvement de translation de cette touche en mouvement de translation de la touche 14 suivant un axe perpendiculaire à la touche 5, ce qui permet d'adapter l'étendue de mesure du capteur 19 à l'étendue de mesure de la pointe 5a de la touche 5 qui peut être rapportée, par exemple par vissage, à une partie d'extrémité de la tige de touche 5 afin de pouvoir remplacer cette pointe par une autre pointe de touche suivant l'application envisagée.

Bien entendu, des moyens d'arrêt en rotation, symbolisés en 20 et 21 et par exemple constitués par des doigts, sont prévus pour empêcher une rotation respectivement de l'élément formant came de renvoi 13 et de la tige rigide 14.

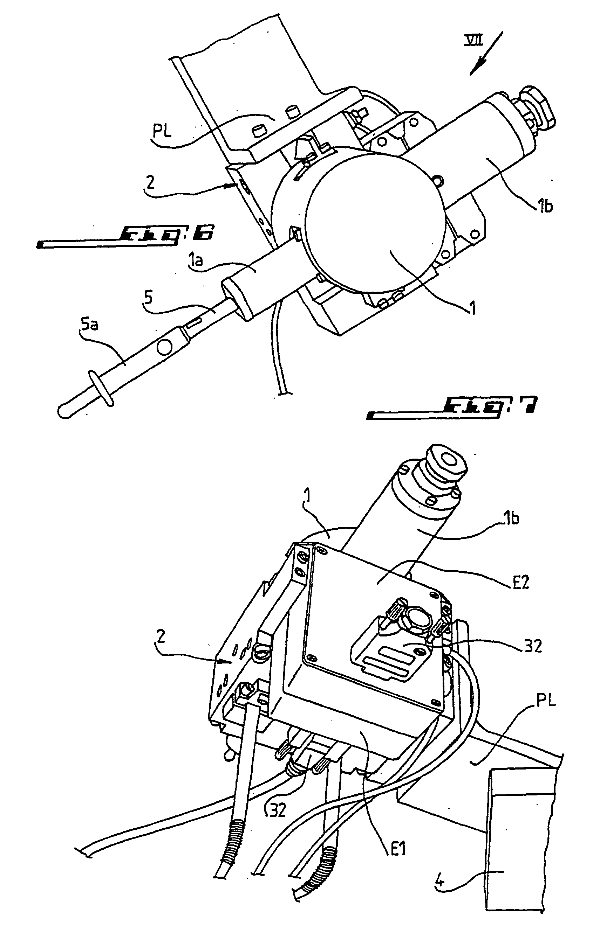

La touche de contact 5 peut également se déplacer en rotation limitée avec le corps principal 1 dans un plan perpendiculaire à l'axe de rotation X-X' de ce corps comme symbolisé par la double flèche F en figure 3. Les moyens de limitation de la rotation du corps principal 1 et donc de la touche de contact 5 comprennent une partie 22 solidaire du corps 1, faisant saillie radialement de celui-ci et disposée entre deux butées espacées 23 solidaires de la pièce de support 2, deux ressorts coaxiaux 24 étant prévus de part et d'autre de la partie en saillie 22 pour rappeler le corps principal 1 à une position médiane de repos entre les deux butées de limitation 23 comme représenté en figure 3.

Le dispositif formant capteur comprend également une autre touche en forme de tige 25 pouvant se déplacer en translation relativement à la pièce de support 2 suivant une direction perpendiculaire à celle de déplacement de la touche de contact 5 lors d'un mouvement de rotation du corps principal 1. A cet effet, le corps 1 comprend un élément formant came de renvoi 26 solidaire de la paroi externe cylindrique du corps 1 et situé de telle façon qu'une rotation du corps 1 provoque, par la surface de came 26a de l'élément 26, un déplacement en translation de la touche de contact 25 qui comporte à son extrémité un galet 27 maintenu constamment en appui sur la surface de came 26a par un ressort de rappel 28 monté dans la pièce de support 2 coaxialement sur une partie interne à cette pièce de la tige de la touche 25 et en appui entre une partie solidaire de la pièce 2 et une plaque 29 solidaire de la partie de tige perpendiculairement à celle-ci. Un capteur 31, solidaire de la pièce de support 2, est prévu pour mesurer les valeurs de déplacement en translation de la touche de contact 25 et donc mesurer la position en rotation du corps 1.

Les figures 6 à 9 représentent en vue extérieure un mode de réalisation concret du dispositif formant capteur tel que décrit aux figures 1 à 5.

Ces figures montrent ainsi le corps cylindrique principal 1 monté à rotation autour de son axe longitudinal relativement à la pièce de support 2, lequel corps 1 est traversé, perpendiculairement à son axe, par deux fourreaux respectivement de petit diamètre 1a et de grand diamètre 1b. Le fourreau de petit diamètre 1a comporte la tige de touche de contact 5 mobile en translation dans le fourreau la coaxialement à celui-ci et qui comporte la pointe de touche rapportée 5a en une matière plastique. Le fourreau 1b contient la tige 10 disposée coaxialement dans celui-ci et permettant de ramener l'élément formant came de renvoi 13 et donc la touche de contact 5 à sa position de repos.

La figure 7 représente en particulier les deux électroniques de capteur de mesure E1 et E2 de forme de parallélèpipède rectangle montés amoviblement l'un sur l'autre sur une partie de la pièce de support 2. Chaque électronique de capteur E1, E2 comporte un connecteur électrique 32 permettant de les relier électriquement à un réseau qui relie les capteurs entre eux et à un calculateur (non représenté) dont la fonction sera décrite ultérieurement. Ce réseau peut être réalisé sous forme d'une liaison série du type RS485. On garantit de la sorte une très bonne immunité aux perturbations électromagnétiques tout en améliorant l'instabilité de mesure effectuée par les capteurs 19, 31. Les figures 8 et 9 représentent de façon détaillée la touche de contact 25 pourvue de son galet 27 et qui peut être enfoncée, lors d'une rotation du corps 1, dans un bloc 33 solidaire de la pièce de support 2 à l'encontre de la force de rappel du ressort 28 par l'élément formant came de renvoi 26 fixé amoviblement par des vis de fixation 34 au corps 1 perpendiculairement à son axe longitudinal.

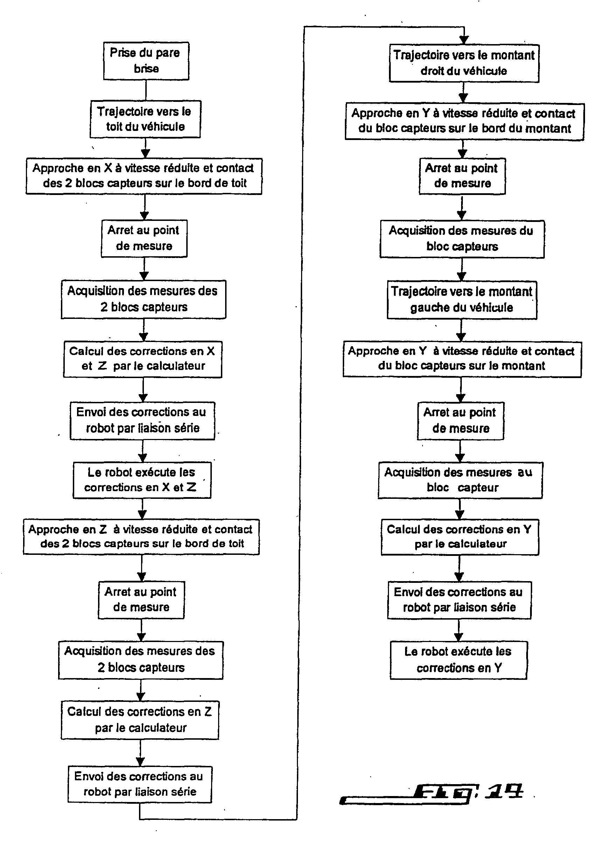

Les figures 10 et 11 représentent l'outil de préhension 2 du bras du robot 4 comportant quatre dispositifs formant capteurs, chacun ayant la structure telle que définie aux figures précédentes, pour permettre la pose d'un pare-brise P à un véhicule V représenté partiellement.

Plus précisément, deux dispositifs formant capteurs A, B sont montés sur la partie haute de l'outil de préhension PL et sont de préférence placés symétriquement par rapport à l'axe du pare-brise P lorsque celui-ci est saisi par l'outil de préhension PL. Les dispositifs formant capteurs A, B sont destinés à effectuer des mesures de position du pare-brise P relativement à l'ouverture de la baie de pare-brise du véhicule en contactant par leurs touches respectives 5 le bord de tôle supérieur ou inférieur de cette ouverture, de préférence le bord supérieur de tôle de cette ouverture.

De plus, les deux autres dispositifs formant capteurs C et D sont placés sur les côtés de l'outil de préhension 2 de façon symétrique par rapport à l'axe du pare-brise P, l'un de ces dispositifs étant destiné à réaliser une mesure sur le montant droit de l'ouverture du pare-brise, l'autre étant destiné à réaliser une mesure sur le montant gauche de cette ouverture par l'intermédiaire de leurs touches de contact respectives 5.

En utilisant quatre dispositifs formant capteurs de mesure A-D, il est possible d'obtenir en sortie de ceux-ci huit valeurs de mesure, deux par dispositif formant capteur, pour permettre de corriger les six degrés de liberté du pare-brise P dans l'espace par rapport au véhicule V et de réaliser ainsi une pose correcte de ce pare-brise.

Le procédé d'assemblage automatique du pare-brise P au véhicule V par le robot se décompose en plusieurs phases qui utilisent un programme développé au niveau du robot et un algorithme développé au niveau d'un calculateur. Ce procédé va être maintenant décrit.

Tout d'abord, les dispositifs de manutentation apportent le véhicule et le pare-brise au poste d'assemblage en des points fixés, avec des tolérances définies généralement de quelques millimètres à quelques dizaines des millimètres.

Le pare-brise est centré en un point fixe par un dispositif de recentrage, connu en soi, et la tolérance de position du pare-brise est réduite et compatible avec le collage en automatique de celui-ci au véhicule.

Le robot, piloté par une baie de contrôle, saisit le pare-brise au point fixe sur le dispositif de recentrage par son outil de préhension PL et réalise une trajectoire figée préalablement définie pour déposer la colle sur la vitre à l'aide d'un moyen de dépôt de colle présent en un point fixe.

Ensuite, le robot exécute de façon commandée une autre trajectoire figée préalablement définie permettant de réaliser les différentes mesures de position du pare-brise relativement au véhicule à l'aide des quatre dispositifs formant capteurs A-D, cette trajectoire ayant été apprise à l'aide d'un véhicule du même type que celui où l'on colle le pare-brise.

Lors de l'exécution de cette trajectoire, le robot réalise tout d'abord un prépositionnement du pare-brise relativement au véhicule dans le cas où la tolérance de positionnement du véhicule est large, par exemple supérieure à 15 mm, et ensuite un positionnement précis du pare-brise pour la pose de celui-ci.

Le cycle de prépositionnement va être décrit brièvement en référence aux figures 12A à 12D et surtout en référence à la figure 14 dont le synoptique est très explicite.

Les figures 12A à 12D représentent uniquement l'un des deux dispositifs formant capteurs A ou B permettant de réaliser une mesure de position du pare-brise dans l'espace relativement au bord supérieur de toit de l'ouverture du véhicule à laquelle doit fixé le pare-brise. Cette mesure s'effectue dans les directions orthogonales X et Z.

Comme représenté en figure 12A, les deux dispositifs formant capteurs A et B s'approchent en direction X à vitesse réduite de l'ouverture du pare-brise et contactent par leurs touches de contact respectives 5 le bord supérieur de toit d'ouverture du véhicule comme représenté en figure 12B qui montre schématiquement que la touche de contact 5 s'est déplacée en rotation avec le corps principal 1. Les quatre valeurs de mesure fournies par les deux dispositifs formant capteurs A et B sont acquises par le calculateur qui les traite avec un algorithme lequel calcule les valeurs de décalage de correction. en direction X et suivant la rotation autour de l'axe Z que doit faire le robot pour se repositionner par rapport au véhicule. Ces valeurs de décalage sont transmises au robot par la liaison du type série et le robot exécute la correction en translation suivant X et en rotation par rapport à Z comme représenté en figure 12C. Ensuite, le robot s'approche à vitesse réduite en direction Z du bord supérieur de l'ouverture et contacte celui-ci comme représenté en figure 12D et, après un arrêt au point de mesure, le calculateur acquiert les signaux de mesure fournis par les deux dispositifs formant capteurs A et B pour calculer des valeurs de correction ou de décalage en direction Z. Le calculateur envoie les valeurs de décalage au robot par la liaison série, lequel robot exécute ces décalages. Ensuite, le robot vient mettre en position successivement les deux autres dispositifs formant capteurs C et D de manière que leurs touches respectives 5 contactent successivement et respectivement les bords de montants gauche et droit de l'ouverture de pare-brise pour effectuer des mesures donnant des valeurs dans les directions Y et Z du fait des positions des dispositifs formant capteurs C et D relativement aux dispositifs formant capteurs A et B telles que représentées en figure 11. Les détails de trajectoires de l'outil de préhension du robot sont représentés en figure 14. Les quatre valeurs de mesure fournies par les deux dispositifs formant capteurs C et D sont acquises par le calculateur qui les traite avec l'algorithme approprié, lequel calcule les valeurs des décalage que doit faire le robot pour repositionner l'outil de préhension par rapport au véhicule dans les directions Y et Z. Ces valeurs de décalage sont transmises au robot par la liaison de type série pour que le robot exécute alors les valeurs de décalage.

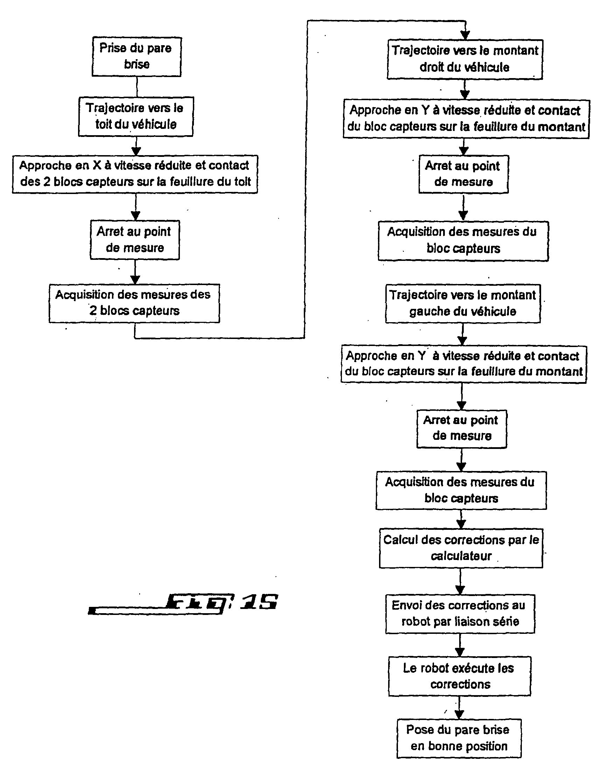

Le positionnement précis du pare-brise relativement au véhicule est réalisé suivant le même principe que celui du prépositionnement, sauf que les pointes 5a des touches de contact 5 des dispositifs formant capteurs A-D effectuent une mesure au fond de la feuillure f de l'ouverture de pare-brise comme représenté aux figures 13A à 13C qui montrent une mesure au fond de la feuillure de toit f de cette ouverture par les deux dispositifs formant capteurs A, B. La figure 15 étant suffisamment explicite pour comprendre le cycle de mesure avec les dispositifs formant capteurs A-D lors du positionnement précis, il n'y a pas lieu de détailler davantage ce cycle de mesure qui permet une mesure plus précise que celle effectuée au bord de l'ouverture comme décrit précédemment en référence aux figures 12A-12D et 14 de manière à permettre une pose correcte du pare-brise dans son ouverture correspondante du véhicule.

L'algorithme du calculateur utilise des données qui sont définies lors d'une phase d'apprentissage réalisée lors de la mise au point initiale du système sur une pièce connue. Un tel apprentissage consiste à trouver la relation qui relie les valeurs mesurées sur le véhicule placé dans une position fixée et la position du robot. Cette relation est ensuite utilisée lors du repositionnement du robot dans les phases de prépositionnement et de positionnement précis. Cet apprentissage nécessite bien entendu un programme spécifique au niveau du robot et un algorithme particulier au niveau du calculateur et qui sont évidents pour un homme du métier sans qu'il soit nécessaire de les définir.

Bien entendu, diverses modifications peuvent être apportées sans sortir du cadre de l'invention. Ainsi, lors des phases de prépositionnement et de positionnement précis du procédé d'assemblage automatique du pare-brise au véhicule, il est possible d'utiliser un seul dispositif formant capteur qui effectue une mesure dans le bord supérieur ou la feuillure supérieure de l'ouverture de pare-brise et un seul capteur qui effectue une mesure sur le bord ou la feuillure du montant droit, puis gauche de l'ouverture de pare-brise.

Le procédé de l'invention utilisant des dispositifs formant capteurs également conformes à l'invention permet d'effectuer un assemblage automatique correct et précis d'un pare-brise au véhicule et d'une manière extrêmement fiable. De plus, l'invention a pour avantage de permettre de monter en ligne des véhicules différents.

## Revendications

1. Dispositif formant capteur destiné en particulier à déterminer la position relative d'un objet dans l'espace, comprenant un corps principal (1) monté à rotation sur une pièce de support (2) suivant une amplitude limitée autour de l'axe de rotation (X-X') du corps principal (1) ; une première touche de contact en forme de tige (5) destinée à contacter l'objet (P) par son extrémité libre et pouvant se déplacer, en contactant l'objet, d'une part en translation dans le corps principal (1) et d'autre part en rotation limitée avec le corps principal (1) dans un plan perpendiculaire à l'axe de rotation de ce corps ; un premier capteur (19) permettant de mesurer les valeurs de déplacement de la première touche de contact (5) ; une seconde touche de contact en forme de tige (25) contactant par son extrémité libre une partie (26) solidaire du corps principal (1) ; et un second capteur (31) permettant de mesurer les valeurs de déplacement de la seconde touche de contact (25), **caractérisé en ce que** ladite première touche de contact (5) est conformée de façon que sa direction de translation soit perpendiculaire audit axe de rotation X-X' du corps principal (1), ladite seconde touche de contact (25) est conformée de façon que sa direction de translation soit parallèle audit axe de rotation X-X'du corps principal (1) et **en ce que** la partie (26) du corps principal (1) est conformée de façon à agir sur l'extrémité libre de la seconde touche de contact (25) pour permettre à cette dernière de se déplacer en translation dans la pièce de support (2) suivant une direction perpendiculaire à celle de déplacement de la première touche de contact(5) lors d'un mouvement de rotation du corps principal (1).

2. Dispositif selon la revendication 1, **caractérisé en ce qu'**il comprend un premier élément formant came de renvoi (13) logé dans le corps principal (1) et pouvant se déplacer en translation simultanément avec la première touche de contact (5) de manière à déplacer une tige rigide (14) logée dans le corps principal (1) suivant une direction perpendiculaire à la direction de déplacement de la première touche de contact (5) et **en ce que** le premier capteur (19) permet de mesurer les valeurs de déplacement de la tige rigide (14).

3. Dispositif selon la revendication 1 ou 2, **caractérisé en ce que** la partie précitée solidaire du corps principal (1) est un second élément formant came de renvoi (26) agencé de façon à transformer une rotation du corps principal (1) en une translation de la seconde touche de contact (25).

4. Dispositif selon la revendication 2 ou 3, **caractérisé en ce que** le premier élément formant came de renvoi (13) est solidaire de l'extrémité de la première touche de contact (5) opposée à son extrémité libre devant contacter l'objet (P) et la première touche de contact (5) est maintenue à une position de repos par des moyens élastiques de rappel (7,9) logés dans le corps principal (1)

5. Dispositif selon la revendication 4, **caractérisé en ce que** les moyens élastiques de rappel comprennent un premier ressort de rappel (7) monté coaxialement sur une partie interne au corps principal (1) de la première touche de contact (5) en étant en appui entre une partie 'solidaire du corps principal (1) et une plaque (8) solidaire de la partie interne de tige perpendiculairement à celle-ci et un second ressort de rappel (9) opposé coaxialement au premier ressort de rappel (7) et exerçant sur le premier élément formant came (13) une force de rappel opposée à celle exercée sur celui-ci par le premier ressort de rappel (7) pour maintenir la première touche de contact (5) à sa position de repos.

6. Dispositif selon la revendication 5, **caractérisé en ce que** le second ressort de rappel (9) est monté coaxialement sur une tige (10) interne au corps principal (1) en étant en appui entre une partie fixe de ce corps et une plaque d'extrémité (12) de la tige interne perpendiculaire à celle-ci, laquelle plaque (12) est en appui sur le premier élément formant came (13).

7. Dispositif selon l'une des revendications 2 à 6, **caractérisé en ce que** la tige rigide (14) déplaçable par le premier élément formant came de renvoi (13) est en contact sur la surface de came (13a) de celui-ci par l'intermédiaire d'un galet (16) monté à rotation à l'extrémité de cette tige et la seconde touche de contact (25) est en appui sur la surface de came (26a) du second élément formant came de renvoi (26) par l'intermédiaire d'un galet (27) monté à rotation à l'extrémité libre de la seconde touche de contact (25).

8. Dispositif selon l'une des revendications précédentes, **caractérisé en ce que** la seconde touche de contact (25) est maintenue en appui par un ressort (28) monté dans la pièce de support (2) coaxialement sur une partie interne de la tige de la seconde touche de contact (25) et en appui entre une partie solidaire de la pièce de support (2) et une plaque (29) solidaire de la partie de tige perpendiculairement à celle-ci.

9. Dispositif selon l'une des revendications précédentes, **caractérisé en ce que** les première et seconde touches de contact (5, 25) sont montées coulissantes respectivement dans des moyens de guidage à billes (6, 30).

10. Dispositif selon l'une des revendications précédentes, **caractérisé en ce que** les moyens de limitation de la rotation du corps principal (1) relativement à la pièce de support (2) comprennent une partie (22) solidaire du corps principal (1) faisant saillie de celui-ci et disposée entre deux butées espacées (23) solidaires de la pièce de support (2) et **en ce que** deux ressorts (24) sont prévus de part et d'autre de la partie en saillie (22) pour rappeler le corps principal (1) à une position médiane de repos entre les deux butées de limitation (23).

11. Dispositif selon l'une des revendications précédentes, **caractérisé en ce que** le corps principal (1) est de forme générale cylindrique et peut tourner relativement à la pièce de support (2) autour de son axe longitudinal et la première touche de contact (5) comporte une pointe de touche (5a) rapportée, par exemple par vissage, à sa tige.

12. Dispositif selon l'une des revendications précédentes, **caractérisé en ce que** la pièce de support (2) est fixée à un bras (4) d'un robot utilisé pour assembler deux objets, tels que par exemple un pare-brise (P) dans l'ouverture de baie de pare-brise correspondant d'un véhicule automobile constituant l'autre objet.

13. Dispositif selon l'une des revendications précédentes, **caractérisé en ce que** les deux capteurs (19, 31) précités sont du type numérique.

14. Procédé d'assemblage automatique de deux objets par un robot muni d'un outil de préhension (PL) d'un objet (P) pour l'assembler et le fixer à un autre objet (V) situé à un poste d'assemblage, consistant à saisir par l'outil de préhension (PL) l'objet (P) centré en un point fixe sur un dispositif de recentrage ; piloter le robot suivant une trajectoire figée préalablement définie, **caractérisé en ce que** l'outil de préhension porte au moins deux dispositifs formant capteurs tels que définis chacun selon l'une quelconque des revendications 1 à 13, de manière qu'en pilotant le robot suivant la trajectoire figée, on amène les touches de contact (5) des deux dispositifs formant capteurs (A, B, C, D) en contact respectivement à deux emplacements différents déterminés de l'autre objet (V) pour fournir des signaux de mesure de position de l'outil de préhension (PL) du robot relativement à l'autre objet (V) dans les directions orthogonales (X, Y, Z) de l'espace ; et **en ce qu'**il consiste également à acquérir les signaux de mesure par un calculateur apte à calculer à partir de ceux-ci des valeurs de décalage de position de l'outil de préhension (PL) du robot par rapport à des valeurs de référence ; transmettre ces valeurs de décalage au robot pour repositionner celui-ci relativement à l'autre objet (V) ; et commander le robot pour que son outil de préhension (PL) assemble et fixe précisément l'objet à l'autre objet.

15. Procédé selon la revendication 14, **caractérisé en ce qu'**il consiste à utiliser quatre dispositifs formant capteurs identiques (A-D) portés par l'outil de préhension (PL) pour fournir huit signaux de mesure de position de l'outil de préhension permettant de corriger les six degrés de liberté de l'objet (P) dans l'espace par rapport à l'autre objet (V).

16. Procédé selon la revendication 14 ou 15, selon lequel l'objet précité est un pare-brise (P) et l'autre objet est un véhicule automobile (V), **caractérisé en ce que** l'étape précitée de positionnement relative de l'outil de préhension (PL) du robot consiste tout d'abord à prépositionner l'outil de préhension, lorsque la tolérance de positionnement du véhicule est large, par exemple supérieure à 15 mm, en amenant les touches de contact (5) des dispositifs formant capteurs (A-D) à contacter les bords de l'ouverture de la baie de pare-brise du véhicule pour fournir des signaux de mesure de position de l'outil de préhension relativement à l'ouverture de baie du pare-brise dans les directions (X, Y et Z) ; ; à repositionner l'outil de préhension du robot en lui transmettant les valeurs de décalage de position de cet outil calculées par le calculateur précité ; et à ensuite positionner précisément l'outil de préhension relativement à l'ouverture de la baie de pare-brise en amenant les touches de contact (5) des dispositifs formant capteurs en contact au fond de la feuillure (f) de ladite ouverture pour repositionner à nouveau l'outil de préhension (PL) à partir des valeurs de décalage des positions de celui-ci calculées par le calculateur à partir des valeurs des signaux de mesure fournis par les dispositifs formant capteurs (A-D).

17. Procédé selon la revendication 16, considérée en combinaison avec la revendication 15, **caractérisé en ce que** deux (A, B) des dispositifs formant capteurs (A-D) sont destinés à effectuer une mesure sur le bord supérieur ou inférieur de l'ouverture de la baie de pare-brise tandis que les deux autres dispositifs formant capteurs (C-D) sont destinés à effectuer une mesure respectivement sur les deux montants droit et gauche de cette ouverture.

18. Procédé selon la revendication 17, **caractérisé en ce que** les dispositifs formant capteurs (A-D) sont montés sur l'outil de préhension symétriquement à l'axe du pare-brise (P).

19. Procédé selon l'une des revendications 14 à 18, **caractérisé en ce que** les dispositifs formant capteurs (A-D) sont du type numérique et sont reliés électriquement entre eux et au calculateur par un réseau de préférence sous forme d'une liaison série du type RS 485.

## Patentansprüche

1. Einen insbesondere zur Bestimmung der relativen Position eines Gegenstandes im Raum bestimmten Sensor bildende Vorrichtung mit einem Hauptkörper (1), der gemäß einer begrenzten Amplitude in Rotation auf einem Halterungsstück (2) um die Rotationsachse (X-X') des Hauptkörpers (1) einer ersten Kontakttaste in Stiftform (5) angebracht ist, der dazu bestimmt ist, den Gegenstand (R) durch sein freies äußeres Ende zu kontaktieren und sich verschieben und dabei den Gegenstand einerseits durch Translation im Hauptkörper (1) und andererseits in begrenzter Rotation mit dem Hauptkörper (1) in einer zur Rotationsachse dieses Körpers senkrechten Ebene kontaktieren kann; einen das Messen der Verschiebungswerte der ersten Kontakttaste (5) erlaubenden ersten Sensor (19); eine zweite Kontakttaste in Stiftform (25), die durch ihr freies äußeres Ende einen mit dem Hauptkörper (1) fest verbundenen Teil (26) kontaktiert; und einen zweiten Sensor (31), der das Messen der Verschiebungswerte der zweiten Kontakttaste (25) erlaubt; **dadurch gekennzeichnet, dass** besagte erste Kontakttaste (25) derart angepasst ist, dass ihre Translationsrichtung senkrecht zu besagter Rotationsachse X-X' des Hauptkörpers (1) ist, besagte zweite Kontakttaste (25) derart angepasst ist, dass ihre Translationsrichtung parallel zu besagter Rotationsachse X-X' des Hauptkörpers (1) ist und dass der Teil (26) des Hauptkörpers (1) derart angepasst ist, dass er auf das freie äußere Ende der zweiten Kontakttaste (25) einwirkt, um bei einer Rotationsbewegung des Hauptkörpers (1) letzterer ihre Translationsverschiebung im Halterungsstück (2) gemäß einer zu der der Verschiebung der ersten Kontakttaste (5) senkrechten Richtung zu erlauben:

2. Vorrichtung gemäß Anspruch 1, **dadurch gekennzeichnet, dass** sie ein erstes Element umfasst, das eine Umsteuerungsknagge (13) umfasst, die im Hauptkörper (1) untergebracht ist und sich gleichzeitig mit der ersten Kontakttaste (5) in Translation derart verschieben kann, dass sie einen steifen Stift (14) verschiebt, der im Hauptkörper (1) gemäß einer senkrechten Richtung zur Verschiebungsrichtung der ersten Kontakttaste (5) untergebracht ist und dass der erste Sensor (19) das Messen der Verschiebungswerte des steifen Stiftes (14) erlaubt.

3. Vorrichtung gemäß Anspruch 1 oder 2, **dadurch gekennzeichnet, dass** der vorgenannte, mit dem Hauptkörper (1) fest verbundene Teil ein zweites Element ist, das eine Umsteuerungsknagge (26) bildet, die derart angeordnet ist, dass sie eine Rotation des Hauptkörpers (1) in eine Translation der zweiten Kontakttaste (25) umwandelt.

4. Vorrichtung gemäß Anspruch 2 oder 3, **dadurch gekennzeichnet, dass** das eine Umformungsknagge (13) bildende erste Element fest mit dem äußeren Ende der ersten Kontakttaste (5) gegenüber seinem freien äußeren Ende, das den Gegenstand (P) kontaktieren soll fest verbunden ist, und die erste Kontakttaste (5) von im Hauptkörper (1) untergebrachten elastischen Rückholmitteln (7, 9) in einer Ruheposition (5) gehalten wird.

5. Vorrichtung gemäß Anspruch 4, **dadurch gekennzeichnet, dass** die elastischen Rückholmittel eine erste Rückholfeder (7) umfassen, die koaxial auf einem inneren Teil des Hauptkörpers (1) der ersten Kontakttaste (5) angebracht ist, wobei sie gegen einen mit dem Hauptkörper (1) fest verbundenen Teil und eine mit dem inneren Teil des zu dieser senkrechten Stiftes fest verbundenen Platte (8) und eine zweite Rückholfeder (9), die koaxial gegenüber der ersten Rückholfeder (7) ist und auf das erste eine Knagge (13) bildende Element eine Rückstellkraft bildet, die der entgegengesetzt ist, die auf dieses von der ersten Rückholfeder (7) ausgeübt wird, um die erste Kontakttaste (5) in ihrer Ruheposition zu halten, aufliegt.

6. Vorrichtung gemäß Anspruch 5, **dadurch gekennzeichnet, dass** die zweite Rückholfeder (9) koaxial auf einem zum Hauptkörper (1) internen Stift (10) angebracht ist, wobei er zwischen einem festen Teil dieses Körpers und einer Außenplatte (12) des zu dieser senkrechten, internen Stiftes aufliegt, wobei besagte Platte (12) auf dem ersten eine Knagge bildenden Element (13) aufliegt.

7. Vorrichtung gemäß Anspruch 2 bis 6, **dadurch gekennzeichnet, dass** der durch das eine Umsteuerungsknagge (13) bildende erste Element verschiebbare steife Stift (14) auf der Knaggenoberfläche derselben (13a) durch eine in Rotation am äußeren Ende dieses Stiftes angebrachte Rolle (16) in Kontakt ist, und die zweite Kontakttaste (25) auf der Knaggenoberfläche (26a) des zweiten eine Umsteuerungsknagge (26) bildenden Elements durch eine in Rotation am freien äußeren Ende der zweiten Kontakttaste (25) angebrachten Rolle (27) aufliegt.

8. Vorrichtung gemäß einem der vorherigen Ansprüche; **dadurch gekennzeichnet, dass** die zweite Kontakttaste (25) durch eine Feder (28) aufliegend gehalten wird, die im Halterungsstück (2) koaxial auf einem inneren Teil des Stiftes der zweiten Kontakttaste (25) und aufliegend zwischen einem mit dem Halterungsstück (2) fest verbundenen Teil und einer mit dem Teil des senkrecht zu diesem fest verbundenen Platte (29).

9. Vorrichtung gemäß einem der vorherigen Ansprüche, **dadurch gekennzeichnet, dass** die erste und zweite Kontakttaste (5, 25) gleitend jeweils in den Führungsmitteln mit Kugeln (6, 30) angebracht sind.

10. Vorrichtung gemäß einem der vorherigen Ansprüche, **dadurch gekennzeichnet, dass** die Begrenzungsmittel der Rotation des Hauptkörpers (1) im Verhältnis zum Halterungsstück (2) einen mit dem Hauptkörper (1) fest verbundenen Teil (22) umfassen, der aus diesem hervorsteht und zwischen zwei beabstandeten, mit dem Halterungsstück (2) fest verbundenen Anschlägen (23) angeordnet ist, und dass die zwei Federn (24) auf der einen und der anderen Seite des hervorstehenden Teils (22) vorgesehen sind, um den Hauptkörper (1) in eine mittlere Ruheposition zwischen den zwei Begrenzungsanschlägen (23) zurückzuholen.

11. Vorrichtung gemäß einem der vorherigen Ansprüche, **dadurch gekennzeichnet, dass** der Hauptkörper (1) in allgemeiner zylindrischer Form ist und im Verhältnis zum Halterungsstück (2) um seine Längsachse drehen kann und die erste Kontakttaste (5) eine zum Beispiel durch Aufschrauben auf ihrem Stift aufgesetzte Tastenspitze (5a) umfasst.

12. Vorrichtung gemäß einem der vorherigen Ansprüche, **dadurch gekennzeichnet, dass** das Halterungsstück (2) an einem Arm (4) eines zum Zusammenbauen zweier Gegenstände eingesetzten Roboters befestigt ist, wie zum Beispiel einer Windschutzscheibe (P) in der Rahmenöffnung der entsprechenden Windschutzscheibe eines den anderen Gegenstand bildenden Kraftfahrzeugs.

13. Vorrichtung gemäß einem der vorherigen Ansprüche, **dadurch gekennzeichnet, dass** die zwei vorgenannten Sensoren (19, 31) vom digitalen Typ sind.

14. Automatisches Verfahren zum Zusammenbau von zwei Gegenständen durch einen mit einem Greifwerkzeug (PL) eines Gegenstandes (P) versehenen Roboter, um ihn zusammenzubauen und an einem sich am Posten für den Zusammenbau befindenden anderen Gegenstand V) zu befestigen, darin bestehend, dass der an einem festen Punkt auf einer Vorrichtung zum Zentrieren zentrierte Gegenstand (P) vom Greifwerkzeug (PL) ergriffen wird; der Roboter gemäß einer zuvor definierten festen Bahn gesteuert wird, **dadurch gekennzeichnet, dass** das Greifwerkzeug wenigstens zwei Vorrichtungen umfasst, die Sensoren bilden, die jeder in einem der Ansprüche 1 bis 13 definiert werden, derart, dass beim Steuern des Roboters gemäß der festen Bahn die Kontakttasten (5) der zwei Sensoren bildenden Vorrichtungen (A, B, C, D) jeweils mit zwei verschiedenen Stellen in Kontakt gebracht werden, die vom anderen Gegenstand (V) bestimmt werden, um Positionsmesssignale des Greifwerkzeugs (PL) des Roboters im Verhältnis zum anderen Gegenstand (V) in den orthogonalen Richtungen (X, Y, Z) des Raums zu liefern; und dass es ebenfalls darin besteht, die Messsignale durch einen Rechner aufzunehmen, der geeignet ist, ausgehend von diesen die Positionsverschiebungswerte des Greifwerkzeugs (PL) des Roboters im Verhältnis zu den Referenzwerten zu berechnen; Übertragung dieser Verschiebungswerte des Roboters zur Neupositionierung desselben im Verhältnis zum anderen Gegenstand (V); und Steuerung des Roboters, damit sein Greifwerkzeug (PL) den Gegenstand zusammenbaut und präzise am anderen Gegenstand befestigt.

15. Verfahren gemäß Anspruch 14, **dadurch gekennzeichnet, dass** es darin besteht, vier Vorrichtungen einzusetzen, die vom Greifwerkzeug (PL) getragene identische Sensoren (A -D) bilden, um acht Positionsmesssignale des Greifwerks zu liefern, die es erlauben, die sechs Stufen der Bewegungsfreiheit des Gegenstandes (P) im Raum im Verhältnis zum anderen Gegenstand (V) zu korrigieren.

16. Verfahren gemäß Anspruch 14 oder 15, nach dem der vorgenannte Gegenstand eine Windschutzscheibe (P) und der andere Gegenstand ein Kraftfahrzeug (V) ist, **dadurch gekennzeichnet, dass** die vorgenannte relative Positionierungsstufe des Greifwerkzeugs (PL) des Roboters zunächst in der Positionierung des Greifwerkzeugs besteht, wenn die Positionierungstoleranz des Fahrzeugs groß, zum Beispiel größer als 15 mm, ist und im Heranbringen der Kontakttasten (5) der Sensoren (A - D) bildenden Vorrichtungen zum Kontaktieren der Ränder der Öffnung des Rahmens der Windschutzscheibe des Fahrzeugs, um Positionsmesssignale des Greifwerks im Verhältnis zur Öffnung des Rahmens der Windschutzscheibe in den Richtungen (X, Y und Z) zu liefern; der Neupositionierung des Roboters, indem ihm die vom vorgenannten Rechner berechneten Positionsverschiebungswerte dieses Werkzeugs übertragen werden; und in der anschließenden präzisen Positionierung des Greifwerkzeugs im Verhältnis zur Öffnung des Windschutzscheibenrahmens durch Heranbringen der Kontakttasten (5) der Sensoren bildenden Vorrichtungen in Kontakt mit dem Boden des Anschlags (f) der besagten Öffnung zur erneuten Neupositionierung des Greifwerkzeugs (PL) ausgehend von den Verschiebungswerten der Positionen desselben, die vom Rechner ausgehend von den durch die Sensoren (A - D) bildenden Vorrichtungen gelieferten Messsignalwerten berechnet werden.

17. Verfahren gemäß des zusammen mit Anspruch 15 betrachteten Anspruchs 16, **dadurch gekennzeichnet, dass** zwei (A, B) Sensoren (A - D) bildende Vorrichtungen dazu bestimmt sind, eine Messung auf dem oberen oder unteren Rand der Öffnung des Windschutzscheibenrahmens durchzuführen, während die zwei anderen Sensoren (C - D) bildenden Vorrichtungen dazu bestimmt sind, eine Messung auf den zwei jeweils dem rechten und dem linken Höhenschenkel dieser Öffnung durchzuführen.

18. Verfahren gemäß Anspruch 17, **dadurch gekennzeichnet, dass** die Sensoren (A - D) bildenden Vorrichtungen symmetrisch zur Achse der Windschutzscheibe (P) auf dem Greifwerkzeug angebracht sind.

19. Verfahren gemäß Anspruch 14 bis 18, **dadurch gekennzeichnet, dass** die Sensoren (A - D) bildenden Vorrichtungen vom digitalen Typ sind und elektrisch untereinander und mit dem Rechner bevorzugt durch ein Netz in Form einer Serienverbindung vom Typ RS 485 verbunden sind.

## Claims

1. Device forming a sensor for in particular determining the relative position of an object in space, said device including a main body (1) mounted rotating on a support piece (2) according to an amplitude limited around the axis of rotation (X-X') of the main body (1) ; a first rod-shaped contact key (5) for contacting the object (P) via its free extremity and being able to move on contacting the object firstly in translation in the main body (1) and secondly in limited rotation with the main body (1) inside a plane perpendicular to the axis of rotation of this body ; a first sensor (19) able to measure the displacement values of the first contact key (5) ; a second rod-shaped contact key (25) contacting via its free extremity a portion (26) integral with the main body (1) ; and a second sensor (31) for measuring the displacement values of the second contact key (25, **characterised in that** said first contact key (5) is shaped so that its translation direction is perpendicular to said axis of rotation X-X' of the main body (1), said second contact key (25) being shaped so that its direction of translation is parallel to said axis of rotation X-X' of the main body (1) and **in that** the portion (26) of the main body (1) is shaped so as to act on the free extremity of the second contact key (25) to enable the latter to move in translation inside the support piece (2) along a direction perpendicular to that of displacement of the first contact key (5) during a movement of rotation of the main body (1).

2. Device according to claim 1, **characterised in that** it includes a first element forming a return cam (13) housed in the main body (1) and able to move simultaneously in translation with the first contact key (5) so as to move a rigid rod (14) housed in the main body (1) along a direction perpendicular to the displacement direction of the first contact key (5) and **in that** the first sensor (19) is able to measure the displacement values of the rigid rod (14).

3. Device according to claim 1 or 2, **characterised in that** said portion integral with the main body (1) is a second element forming a return cam (26) disposed in such a way so as to transform a rotation of the main body (1) into a translation of the second contact key (25).

4. Device according to claim 2 or 3, **characterised in that** the first element forming the return cam (13) is integral with the extremity of the first contact key (5) opposite its free extremely needing to contact the object (P) and the first contact key (5) is kept in an idle position by elastic return means (7, 9) housed in the main body (1).

5. Device according to claim 4, **characterised in that** the elastic return means include a first return spring (7) mounted coaxially on a portion inside the main body (1) of the first contact key (5) whilst being in support between a portion integral with the main body (1) and a plate (8) integral with the internal rod portion perpendicular to the latter and a second return spring (9) coaxially opposite the first return spring (7) and exerting on the first element forming a cam (13) a return force opposing the one exerted on the latter by the first return spring (7) so as to keep the first contact key (5) in its idle position.

6. Device according to claim 5, **characterised in that** the second return spring (9) is mounted coaxially on a rod (10) inside the main body (1) by being in support between one fixed portion of this body and an extremity plate (12) of the internal rod perpendicular to the latter, said plate (12) being in support on the first element forming a cam (13).

7. Device according to one of claims 2 to 6, **characterised in that** the rigid rod (14) able to be moved by the first element forming a return cam (13) is in contact on the cam surface (13a) of the latter by means of a roller (16) mounted rotating at the extremity of this rod and the second contact key (25) is in support on the cam surface (26a) of the second element forming a return cam (26) by means of a roller (27) mounted rotating at the free extremity of the second contact key (25).

8. Device according to one of the preceding claims, **characterised in that** the second contact key (25) is kept in support by a spring (28) mounted in the support piece (2) coaxially on an internal portion of the rod of the second contact key (25) and in support between a portion integral with the support piece (2) and a plate (29) integral with the rod portion perpendicular to the latter.

9. Device according to one of the preceding claims, **characterised in that** the first and second contact keys (5, 25) are mounted sliding respectively in ball guiding means (6, 30).

10. Device according to one of the preceding claims, **characterised in that** the means for limiting rotation of the main body (1) in relation to the support piece (2) include a portion (22) integral with the main body (1) projecting from the latter and placed between two spaced stops (23) integral with the support piece (2) and **in that** two springs (24) are provided on both sides of the projecting portion (22) so as to bring the main body (1) back to a median idle position between the two limitation stops (23).

11. Device according to one of the preceding claims, **characterised in that** the main body (1) has a general cylindrical shape and is able to rotate in relation to the support piece (2) around its longitudinal axis, and the first contact key (5) comprises a key point (5a) mounted, by screwing for example, on its rod.

12. Device according to one of the preceding claims, **characterised in that** the support piece (2) is fixed to an arm (4) of a robot used for assemble two objects, such as a windscreen (P) in the corresponding windscreen opening panel opening of a motor vehicle constituting the other object.

13. Device according to one of the preceding claims, **characterised in that** said two sensors (19, 3) are digital sensors.

14. Method for automatically assembling two objects by a robot fitted with a gripping tool (PL) for picking up an object (P) so as to assemble it and fix it on another object (V) situated at an assembling station, said method consisting of a gripping tool (PL) picking up the object (P) centered on a fixed point on a recentering device ; of controlling the robot according to a previously defined fixed trajectory, **characterised in that** the gripping tool bears at least two devices forming sensors as defined according to one of claims 1 to 13 so that by controlling the robot along the fixed trajectory, the contact keys (5) of the two devices forming sensors (A, B, C, D) are brought respectively into contact with two specific different locations of the other object (V) so as to provide signals measuring the position of the gripping tool (PL) of the robot in relation to the other object (V) in the orthogonal directions (X, Y, Z) of the space ; and **in that** it also consists of acquiring the measuring signals by a computer able to calculate on the basis of these the position shift values of the gripping tool (PL) of the robot with respect to the reference values, transmitting these shift values to the robot so as to reposition the latter in relation to the other object (V) and controlling the robot so that its gripping tool (PL) accurately assembles and fixes the object on the other object.

15. Method according to claim 14, **characterised in that** it consists of using four devices forming identical sensors (A-D) borne by the gripping tool (PL) so as to provide eight signals for measuring the position of the gripping and thus correct the six degrees of freedom of the object (P) in space with respect to the other object (V).

16. Method according to claim 14 or 15 according to which said object is a windscreen (O) and the other object is a motor vehicle (V), **characterised in that** said stage for the relative positioning of the gripping tool (PL) of the robot consists first of all of prepositioning the gripping tool when the positioning tolerance of the vehicle is extensive, such as more than 15 mm by bringing the contact keys (5) of the devices forming sensors (A-D) to contact the edges of the opening of the windscreen opening panel of the vehicle so as to supply signals for measuring the position of the gripping tool in relation to the opening panel opening of the windscreen in the directions (X, Y and Z) ; of repositioning of the gripping tool of the robot by transmitting to it the position shift values of this tool calculated by said computer ; and of then accurately positioning the gripping tool in relation to the opening of the windscreen opening panel by bringing the contact keys (5) of the devices forming sensors into contact at the bottom of the surround (f) of said opening so as to again reposition the gripping tool (PL) on the basis of shift values of the positions of the latter calculated by the computer on the basis of the values of the measurement signals provided by the devices forming sensors (A-D).

17. Method according to claim 16 taken in combination with claim 15, **characterised in that** two (A, B) of the devices forming sensors (A-D) are used to carry out a measurement on the upper or lower edge of the opening of the windscreen opening panel, whereas the other two devices forming sensors (C-D) are used to carry out a measurement respectively on the two right and left pillars of this opening.

18. Method according to claim 17, **characterised in that** the devices forming sensors (A-D) are mounted on the gripping tool symmetrically to the axis of the windscreen (P).

19. Method according to one of claims 14 to 18, **characterised in that** the devices forming sensors (A-D) are of the digital type and are electrically interconnected and to the computer by a network, preferably in the form of an RS 485 type series link.
